# EUROPÄISCHE PATENTSCHRIFT

(11) **EP 1 382 513 B1**
(45) Veröffentlichungstag und Bekanntmachung des Hinweises auf die Patenterteilung: **07.11.2007**
(21) Anmeldenummer: 03015437.1
(22) Anmeldetag: 09.07.2003
(51) Int. Cl.: B62D 25/04

(54) **Fahrzeugkarosserie mit einer B-Säule**
Vehicle body with a B-pillar
Carrosserie de véhicule avec montant 'B'

(30) Priorität: 17.07.2002 DE 10232320
(43) Veröffentlichungstag der Anmeldung: 21.01.2004
(73) Patentinhaber: Bayerische Motoren Werke Aktiengesellschaft, 80809 München (DE)
(72) Erfinder: Rill, Roland, 80807 München (DE); Fischer, Markus, 85055 Ingoldstadt (DE)

(56) Entgegenhaltungen:
- EP-A- 1 024 073
- EP-A- 1 247 725
- EP-A- 1 249 381
- DE-A- 4 016 730
- DE-A- 10 162 825
- DE-A- 19 603 098
- DE-U- 20 014 361
- PATENT ABSTRACTS OF JAPAN Bd. 1997, Nr. 07, 31. Juli 1997 (1997-07-31) & JP 9 066799 A (HONDA MOTOR CO LTD), 11. März 1997 (1997-03-11)
- PATENT ABSTRACTS OF JAPAN Bd. 1997, Nr. 02, 28. Februar 1997 (1997-02-28) & JP 8 276864 A (DAIHATSU MOTOR CO LTD), 22. Oktober 1996 (1996-10-22)

## Beschreibung

Die Erfindung betrifft eine Fahrzeugkarosserie mit einer B-Säule gemäß des Oberbegriffs des Patentanspruchs 1.

Aus der JP 08-276864 A ist eine B-Säule eines Fahrzeugs in Schalenbauweise bekannt, die im unteren Abschnitt innen durch ein gerades Rohr verstärkt ist. Dadurch treten bei einem Seitencrash nur geringe Verformungen im unteren Abschnitt der B-Säule auf. Allerdings ist der Querschnitt der B-Säule im unteren Abschnitt wesentlich größer, als im nicht verstärkten, oberen Abschnitt der B-Säule. Mit der starken Veränderung des Querschnitts geht ein enormer Sprung in der Steifigkeit der B-Säule einher. Bei einem Seitencrash kann es dadurch im Extremfall zu einem Materialversagen im oberen Abschnitt der B-Säule kommen.

Ein weiteres Dokument EP 1247725 offenbart eine ähnliche Struktur.

Aufgabe der Erfindung ist es, eine Fahrzeugkarosserie mit einer B-Säule zu schaffen, die trotz einer hohen Steifigkeit schmal gehalten werden kann.

Diese Aufgabe wird durch die Merkmale des Patentanspruchs 1 gelöst.

Erfindungsgemäß ist bei einer Fahrzeugkarosserie eine B-Säule in Schalenbauweise innen mit einem Rohr verstärkt. Das Rohr erstreckt sich über die ganze Länge der B-Säule vom Schweller bis zum Dachrahmen. Durch das durchgehende Rohr kommt es zu keinem großen Steifigkeitssprung mehr in der B-Säule. Die B-Säule weist aufgrund des homogenen Rohrverlaufs eine hohe Steifigkeit auf. Gegenüber einer konventionellen B-Säule in Schalenbauweise ohne Rohr verlagert sich die neutrale Faser durch das verstärkende Rohr mehr in den Druckbereich der B-Säule. Damit verbunden ist eine Vergrößerung des Widerstandsmomentes. Dies ermöglicht eine schlanke und kompakte Bauweise der B-Säule, ohne nennenswerte Einbußen der Steifigkeit in Kauf nehmen zu müssen. Das Rohr kann leicht gebogen sein, um der Form der B-Säule folgen zu können.

Das Rohr ist idealerweise vergütet. Dadurch kann das Rohr Streckgrenzen Rp_{0,2} von 1000 bis 1200 MPa und höher aufweisen. Solch ein ultrahochfeste Rohr ermöglicht es, auch die US-amerikanischen Seitencrash-Anforderungen SINCAP zu erfüllen. Aufgrund dieser hohen erforderlichen Streckgrenzen können keine im Innenhochdruckverfahren (IHU) hergestellten Rohre verwendet werden. IHU-Rohre weisen eine Streckgrenze Rp_{0,2} von maximal 300 bis 400 MPa auf. Ferner sind die Werkzeugkosten für ein vergütetes und gebogenes Rohr wesentlich niedriger, als die Werkzeugkosten für ein im IHU-Verfahren hergestelltes Rohr.

Das Rohr ist mit seinem unteren Abschnitt günstigerweise über ein Deformationselement an der Fahrzeugkarosserie angebunden. Das Deformationselement dient zum gezielten Energieabbau bei einem Seitencrash. Dadurch kann bei einem leichten Seitencrash vermieden werden, dass die gesamte Karosserie verformt wird. Die Aufprallenergie wird dann im Idealfall durch eine Verformung der B-Säule und des Deformationselementes abgebaut.

Die Fahrzeugkarosserie weist vorteilhafterweise einen durchgehenden Querträger auf, der den Bereich der Anbindung des Deformationselementes der linken B-Säule an die Fahrzeugkarosserie mit dem Bereich der Anbindung des Deformatiönselementes der rechten B-Säule verbindet. Außerdem ist günstigerweise ein Dachquerspriegel vorgesehen, der den Bereich der Anbindung des Rohres der linken B-Säule an den Dachrahmen mit dem Bereich der Anbindung des Rohres der rechten B-Säule verbindet. Der Dachquerspriegel sollte dabei als Druckstab ausgelegt und ohne Momentenanbindung am Dachrahmen nur aufgelegt sein.

Die linke und rechte B-Säule bilden so zusammen mit dem Querträger und dem Dachquerspriegel einen steifen Ringverbund. Dieser Ringverbund erhöht die Steifigkeit der Karosserie erheblich. Bei einem Seitencrash ist die betroffene B-Säule so sehr steif durch den Ringverbund abgestützt, sodass die Intrusion in den Fahrzeuginnenraum nur gering ist.

Das Rohr wird idealerweise mit einer Außenschale der B-Säule vormontiert, bevor diese Vormontageeinheit an der Fahrzeugkarosserie verbaut wird. Zum Verbinden eines vergüteten Rohres mit einer Außenschale aus Stahlblech sind Schutzgasverschweißungen erforderlich. Normalerweise wird eine Fahrzeugkarosserie nur widerstandspunktgeschweißt. Dies ist ein wesentlich einfacheres Schweißverfahren als Schutzgasschweißen. Durch das Bilden der Vormontageeinheit ist es nun möglich, die Schutzgasverschweißung vorab, und damit nicht an der eigentlichen Fahrzeugkarosserie, durchzuführen. Die Fahrzeugkarosserie kann damit ausschließlich widerstandspunktgeschweißt werden.

Die erfindungsgemäße Fahrzeugkarosserie kann besonders schlanke B-Säulen aufgrund der Verstärkung mit einem gebogenen Rohr aufweisen. Dies ist insbesondere bei einem Coupé von Vorteil, da eine wuchtig wirkende B-Säule das optische Erscheinungsbild des Fahrzeugs deutlich beeinträchtigen würde. Dabei ist insbesondere bei Coupés meist eine besonders steife B-Säule erforderlich, da die meisten Coupés rahmenlose Fahrzeugtüren haben, sodass die geschlossenen Fahrzeugtüren nur wenig zur Steifigkeit der Fahrzeugkarosserie beitragen können.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die Figuren zeigen in schematischer Darstellungsweise:
- **Fig. 1**: eine perspektivische Zusammenbaudarstellung einer Fahrzeugkarosserie mit einer B-Säule,
- **Fig. 2**: eine perspektivische Darstellung eines Ringverbunds bei der Fahrzeugkarosserie aus **Fig. 1** bestehend aus den B-Säulen, einem Querträger und einem Dachquerspriegel und
- **Fig. 3**: eine Darstellung der B-Säule aus **Fig. 1** mit mehreren Schnitten durch ein verstärkendes Rohr der B-Säule.

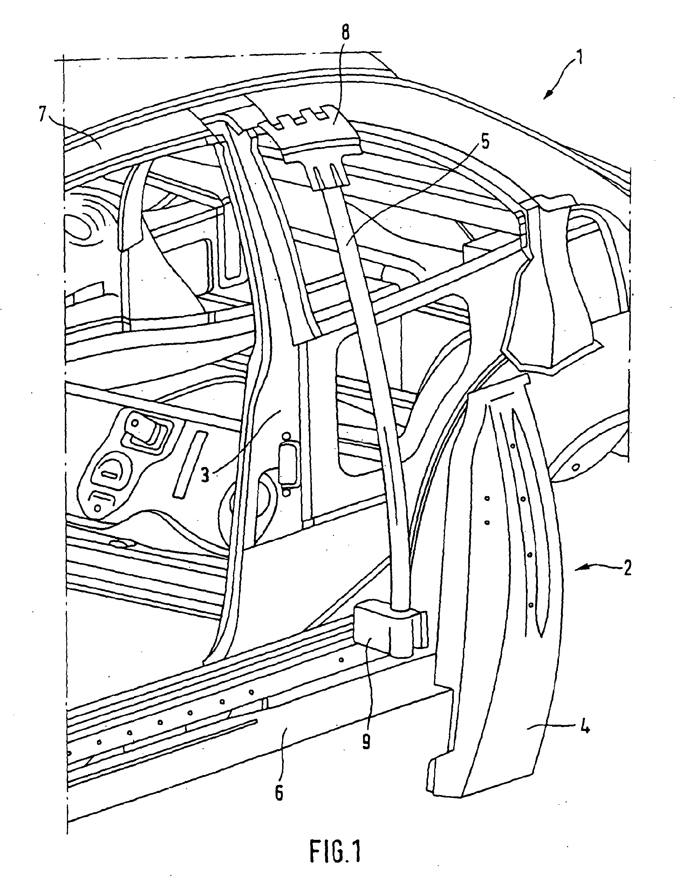

Die in **Fig. 1** dargestellte Fahrzeugkarosserie 1 gehört zu einem zweitürigen Coupé mit rahmenlosen Seitentüren. Die Fahrzeugkarosserie 1 weist seitlich jeweils eine B-Säule 2 in Schalenbauweise auf. Jede B-Säule 2 umfasst eine Innenschale 3, eine Außenschale 4 und ein gebogenes Rohr 5. Die Außenschale 4 erstreckt sich dabei nur vom Schweller 6 bis etwa auf Brüstungshöhe. Das Rohr 5 zwischen der Innen- und der Außenschale 3 und 4 ist ein vergütetes Stahlrohr mit einer Streckgrenze Rp_{0,2} zwischen 1000 und 1200 MPa, dass sich über die ganze Länge der B-Säule 2 vom Schweller 6 bis zum Dachrahmen 7 erstreckt. Es ist mit seinem oberen Ende über ein Anschlusselement 8 flächig an den Dachrahmen 7 angebunden. Das untere Ende des Rohrs 5 stützt sich über ein Deformationselement 9 am Schweller 6 ab. Das Deformationselement 9 besteht aus einem hochfesten Stahl.

Bei einem Seitenaufprall weist die B-Säule 2 aufgrund der Verstärkung mit dem Rohr 5 eine so hohe Steifigkeit auf, dass die US-amerikanischen Seitenaufprallanforderungen SINCAP in vollem Umfang erfüllt werden. Da das Rohr 5 sich über die ganze Länge der B-Säule erstreckt, gibt es keine gravierenden Unterschiede in der Steifigkeit der B-Säule 2 zwischen dem oberen und dem unteren Abschnitt. Das Anschlusselement 8 stellt oben eine flächige Lasteinleitung in den Dachrahmen 7 sicher, während das Deformationselement 9 unten durch eine gezielte Verformung Aufprallenergie absorbiert. Die verbleibende, nicht absorbierte Aufprallenergie wird unten vom Deformationselement 9 in den Schweller 6 eingeleitet.

Der Aufbau der B-Säule 2 mit dem ultrahochfesten Rohr 5 zur Versteifung verhindert bei einem Seitenaufprall eine große Intrusion der B-Säule 2 in den Fahrgastraum. Aufgrund der Anbindung der B-Säule 2 an die Fahrzeugkarosserie 1 über das Anschlusselement 8 und das Deformationselement 9 entsteht zudem erst bei relativ hohen Aufprallenergien eine irreparable Verformung der Fahrzeugkarosserie 1.

Beim Rohbau einer Fahrzeugkarosserie kommen bevorzugt ausschließlich Widerstandspunktschweißgeräte zum Einsatz. Das vergütete Rohr 5 ist allerdings mit dem Deformationselement 9 unter Schutzgas ringverschweißt und mit der Außenschale 4 und dem Anschlusselement 8 schutzgasverschweißt. Um dennoch beim Rohbau der eigentlichen Fahrzeugkarosserie nur widerstandspunktschweißen zu können, wird das Rohr 5 mit dem Deformationselement 9, der Außenschale 4 und dem Anschlusselement 8 vorab zu einer Vormontageeinheit unter Schutzgas zusammengeschweißt. Dies kann fern ab vom eigentlichen Rohbau oder sogar bei einer Zulieferfirma erfolgen. Die so gebildete Vormontageeinheit kann dann über Widerstandspunktschweißungen mit der restlichen Fahrzeugkarosserie 1 verbunden werden.

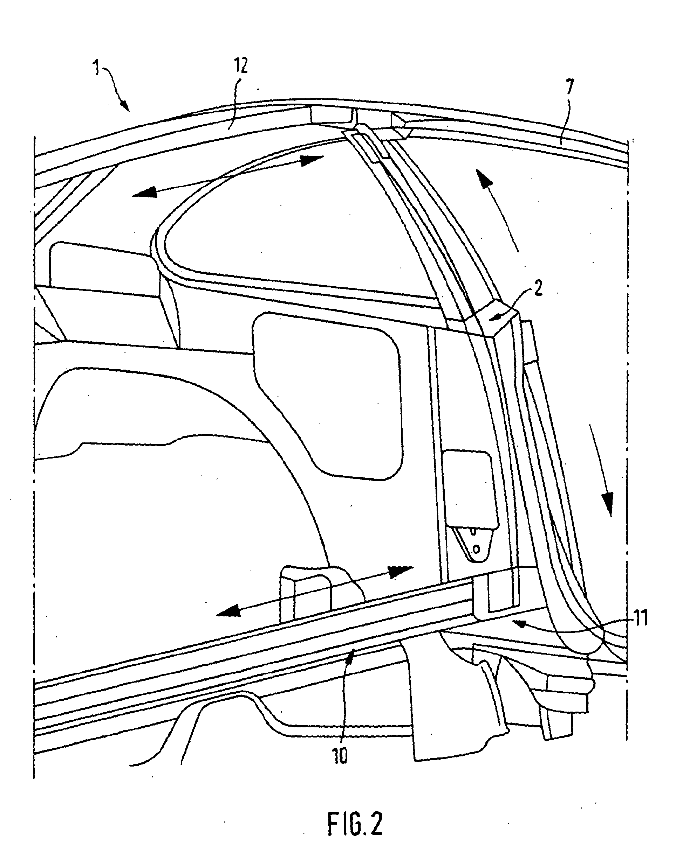

**Fig. 2** zeigt die Fahrzeugkarosserie 1 mit der angeschweißten B-Säule 2. Zwischen dem linken und dem rechten Schweller 6 im Bereich der Deformationselemente 9 erstreckt sich in Fahrzeugquerrichtung ein Querträger 10. Der Querträger 10 weist an seinen beiden Enden, mit denen er an den Schwellern 6 angebracht ist, jeweils einen Deformationsabschnitt 11 auf. Die Deformationsabschnitte 11 verformen sich gezielt unter Last und absorbieren dabei Energie. Zwischen dem Bereich der Anbindung des Anschlusselementes 8 der einen linken und der rechten B-Säule 2 an den Dachrahmen 7 erstreckt sich ein Dachquerspriegel 12. Der Dachquerspriegel 12 ist als Druckstab ausgelegt und ohne Momentenanbindung nur auf den Dachrahmen 7 aufgelegt.

Die B-Säulen 5 bilden so zusammen mit dem Querträger 10 und dem Dachquerspriegel 12 einen Ringverbund. Dadurch entsteht insgesamt eine sehr steife Fahrzeugkarosserie 1. Bei einem Seitenaufprall verteilen sich die in die Fahrzeugkarosserie 1 eingeleiteten Kräfte ähnlich wie es mit den Pfeilen dargestellt ist. Auftretende Intrusionen in den Fahrzeuginnenraum sind vergleichsweise zu herkömmlichen Fahrzeugkarosserien nur sehr gering.

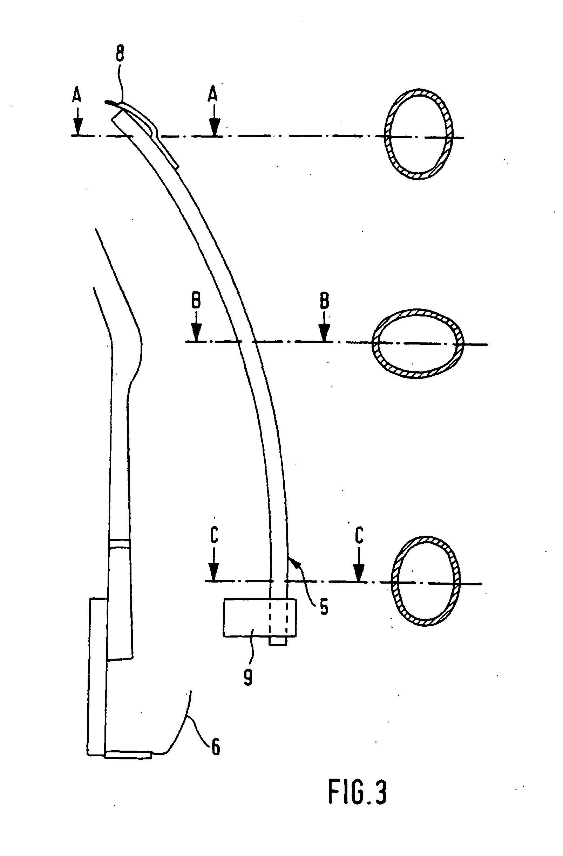

In **Fig. 3** ist eine Seitenansicht des Rohres 5 dargestellt, in der deutlich die gebogene Form erkennbar ist. Im oberen und unteren Endbereich weist das Rohr - wie im Schnitt A - A und im Schnitt C - C dargestellt - einen ovalen Querschnitt auf, dessen Längserstreckung in Fahrzeuglängsrichtung verläuft. Im mittleren Bereich hat das Rohr 5 - wie im Schnitt B - B dargestellt - ebenfalls einen ovalen Querschnitt, allerdings verläuft dessen Längserstreckung in Fahrzeugquerrichtung. Das Rohr 5 verläuft innen und außen über seine Länge kontinuierlich, sodass die Querschnitte fließend ineinander übergehen. Bei einem Seitencrash entsteht im mittleren Bereich der B-Säule 2 und damit auch im mittleren Bereich des Rohres 5 die größte Biegebeanspruchung. Aufgrund des oben beschriebenen Querschnittsverlaufs setzt das Rohr 5 der größten Biegebeanspruchung das größte Biegewiderstandsmoment entgegen.

## Patentansprüche

1. Fahrzeugkarosserie mit einer B-Säule in Schalenbauweise, die innen mit einem Rohr (5) verstärkt ist, das sich über die ganze Länge der B-Säule (2) vom Schweller (6) bis zum Dachrahmen (7) erstreckt, und das vergütet ist, wobei das Rohr (5) mit seinem unteren Abschnitt über ein Deformationselement (9) an der Fahrzeugkarosserie (1) angebunden ist, **dadurch gekennzeichnet, dass** die Fahrzeugkarosserie (1) einen durchgehenden Querträger (10) aufweist, der den Bereich der Anbindung des Deformationselementes (9) einer linken mit dem einer rechten B-Säule (2) verbindet, und dass der Querträger (10) an seinen beiden Enden jeweils einen Deformationsabschnitt (11) aufweist.

2. Fahrzeugkarosserie nach Anspruch 1, **dadurch gekennzeichnet, dass** das Rohr (5) eine Streckgrenze Rp_{0,2} größer gleich 1000 MPa hat.

3. Fahrzeugkarosserie nach einem der vorhergehenden Ansprüche, **dadurch gekennzeichnet, dass** das Rohr (5) mit seinem oberen Abschnitt über ein Anschlusselement (8) an den Dachrahmen (7) flächig angebunden ist.

4. Fahrzeugkarosserie nach einem der vorhergehenden Ansprüche, **dadurch gekennzeichnet, dass** die Fahrzeugkarosserie (1) einen Dachquerspriegel (12) aufweist, der den Bereich der Anbindung des Rohres (5) der linken B-Säule (2) an den Dachrahmen (7) mit dem der rechten B-Säule verbindet.

5. Fahrzeugkarosserie nach Anspruch 4, **dadurch gekennzeichnet, dass** der Dachquerspriegel (12) als Druckstab ausgelegt ist.

6. Fahrzeugkarosserie nach Anspruch 4 oder 5, **dadurch gekennzeichnet, dass** die linke und die rechte B-Säule (2) zusammen mit dem Querträger (10) und dem Dachquerspriegel (12) einen steifen Ringverbund bilden.

7. Fahrzeugkarosserie nach einem der vorhergehenden Ansprüche, **dadurch gekennzeichnet, dass** das Rohr (5) mit einer Außenschale (4) der B-Säule (2) vormontiert wird, bevor es als Vormontageeinheit an der Fahrzeugkarosserie (1) verbaut wird.

8. Fahrzeugkarosserie nach einem der vorhergehenden Ansprüche, **dadurch gekennzeichnet, dass** die Fahrzeugkarosserie (1) für ein Coupé konzipiert ist.

9. Fahrzeugkarosserie nach Anspruch 7 und 8, **dadurch gekennzeichnet, dass** das Coupé rahmenlose Fahrzeugtüren hat.

## Claims

1. A vehicle body with a B column in shell construction and internally reinforced by a tube (5) extending over the entire length of the B column (2) from the sillboard (6) to the roof frame (7) and temper-hardened, wherein the bottom portion of the tube (5) is connected to the body (1) via a deformation element (9), **characterised in that** the body (1) has a continuous transverse member (10) which connects the region where the deformation element (9) of a left column is attached to the corresponding region for a right B column (2), and the transverse member (10) has a deformation portion (11) at both ends.

2. A vehicle body according to claim 1, **characterised in that** the tube (5) has a yield strength Rp_{0.2} greater than or equal to 1000 MPa.

3. A vehicle body according to any of the preceding claims, **characterised in that** the top portion of the tube (5) is close-fittingly attached to the roof frame (7) by a connecting element (8).

4. A vehicle body according to any of the preceding claims, **characterised in that** the body (1) has a roof arch (12) which joins the region where the tube (5) of the left B column (2) is attached to the roof frame (7) to the corresponding region of the right B column.

5. A vehicle body according to claim 4, **characterised in that** the roof arch (12) is a compression member.

6. A vehicle body according to claim 4 or claim 5, **characterised in that** the left and the right B column (2), the transverse member (10) and the roof arch (12) form a rigid annular composite member.

7. A vehicle body according to any of the preceding claims, **characterised in that** the tube (5) and an outer shell (4) of the B column (2) are preassembled before being installed as a pre-assembly unit in the vehicle body (1).

8. A vehicle body according to any of the preceding claims, **characterised in that** the body (1) is designed for a coupé.

9. A vehicle body according to claim 7 or claim 8, **characterised in that** the coupé has frameless doors.

## Revendications

1. Carrosserie de véhicule ayant une colonne B à structure en forme de coque renforcée intérieurement par un tube 5 s'étendant sur toute la longueur de la colonne B du seuil 6 jusqu'au cadre de toit 7 et qui est traité,
le tube 5 et son segment inférieur étant reliés à la carrosserie du véhicule 1 par un élément de déformation 9,
**caractérisée en ce que**
la carrosserie 1 comporte une traverse continue 10 reliée à la zone de liaison de l'élément de déformation 9 reliant une colonne B gauche à une colonne B droit 2, et
les deux extrémités de la traverse 10 ont chacune un segment de déformation 11.

2. Carrosserie de véhicule selon la revendication 1,
**caractérisée en ce que**
le tube 5 a une limite d'élasticité Rp_{0,2} supérieure ou égale à 1000 MPa.

3. Carrosserie de véhicule selon l'une des revendications précédentes,
**caractérisée en ce que**
le tube 5 et son segment supérieur sont reliés par un élément de liaison 8, à plat au cadre de toit 7.

4. Carrosserie de véhicule selon l'une des revendications précédentes,
**caractérisée en ce que**
la carrosserie 1 du véhicule comporte un arceau transversal 12 de toit reliant la zone de fixation du tube 5 de la colonne B gauche 2 au cadre 7 du toit avec la colonne B droit.

5. Carrosserie de véhicule selon la revendication 4,
**caractérisée en ce que**
l'arceau transversal 12 est une barre de compression.

6. Carrosserie de véhicule selon la revendication 4 ou 5,
**caractérisée en ce que**
les colonnes B gauche et droit 2 forment un cerclage rigide avec la traverse 10 et l'arceau de toit 12.

7. Carrosserie de véhicule selon l'une des revendications précédentes,
**caractérisée en ce que**
le tube 5 est pré-assemblé avec la coque extérieure 4 de la colonne B 2 avant d'être installé comme unité pré-assemblée sur la carrosserie 1 du véhicule.

8. Carrosserie de véhicule selon l'une des revendications précédentes,
**caractérisée en ce que**
la carrosserie 1 est celle d'un coupé.

9. Carrosserie de véhicule selon les revendications 7 et 8,
**caractérisée en ce que**
le coupé a des portières sans cadre.
